# EUROPÄISCHE PATENTSCHRIFT

(11) **EP 1 238 900 B1**
(45) Veröffentlichungstag und Bekanntmachung des Hinweises auf die Patenterteilung: **20.08.2008**
(21) Anmeldenummer: 02005047.2
(22) Anmeldetag: 06.03.2002
(51) Int. Cl.: B62K 25/28

(54) **Fahrradrahmen**
Bicycle frame
Cadre de bicyclette

(30) Priorität: 06.03.2001 DE 10110709
(43) Veröffentlichungstag der Anmeldung: 11.09.2002
(73) Patentinhaber: Centurion Renner KG, 71106 Magstadt (DE)
(72) Erfinder: Renner, Wolfgang, 71106 Magstadt (DE); Falke, Jürgen, 71634 Ludwigsburg (DE); Scheffer, Lutz, 75173 Pforzheim (DE)
(74) Vertreter: Wallinger, Michael

(56) Entgegenhaltungen:
- EP-A- 0 723 907
- WO-A-99/44880
- FR-A- 884 138
- FR-A- 923 235
- US-A- 625 456
- US-A- 714 121
- US-A- 944 795
- US-A- 1 047 430
- US-A- 5 611 557
- US-A- 5 899 480
- US-A- 6 036 213
- US-A- 6 102 421
- US-A- 6 131 934
- US-A- 6 164 676

## Beschreibung

Die Erfindung betrifft einen Fahrradrahmen, bei dem das Hinterrad gegenüber dem Rahmen gefedert gelagert ist.

Bei Fahrten mit Fahrrädern auf unebenen Straßen, über Kopfsteinpflaster oder bei Fahrten durch das Gelände kann eine Federung des Fahrrads den Komfort und die Sicherheit erhöhen. Zur Federung eines Fahrrads sind im Stand der Technik verschiedene Lösungsansätze bekannt geworden. Dazu gehört neben Hinterradfederungssystemen z. B. der Einsatz einer sogenannten Federgabel, die das Vorderrad eines Fahrrads federnd lagert. Weiterhin sind federnde Sattelstützen bekannt geworden.

Bei der Hinterradfederung von Fahrrädern existieren unterschiedliche Systeme, wie z. B. sogenannte Eingelenker oder sogenannte Eingelenker mit mehrgelenkiger Abstützung des Hinterbaus am Hauptrahmen des Fahrrads oder auch sogenannte Viergelenker, die auch ein sogenanntes Horst-Link-Ausgleichsgelenk zwischen den Kettenstreben des Hinterbaus und den Ausfallenden aufweisen können.

Bei Hinterradfederungssystemen wird ein Federungsweg des Hinterbaus senkrecht zum Boden jeweils in einen Federweg des Federsystems umgewandelt. Dabei werden kompakt bauende Federelemente verwendet, und es erfolgt eine Übersetzung des Federungsweges der Hinterradachse auf den Federweg des Federelements in einem typischen Verhältnis von z. B. 1 : 3.

Bei einem maximalen Federweg bzw. Federarbeitshub von 32 mm und einem wirksamen Übersetzungsverhältnis von 1 : 3,0 steht dann ein maximaler Federungsweg von 96 mm an der Hinterradachse senkrecht zum Boden zur Verfügung. Derartige Werte erhält man etwa mit einem marktüblichen Eingelenkhinterbau und einem Standardfederelement mit einer Einbaulänge von 165 mm.

Marktübliche Viergelenkhinterbauten haben z. B. mit einem Standardfederelement eine Einbaulänge von etwa 145 mm und erzeugen beispielsweise bei einem maximalen Federweg bzw. Federarbeitshub von 25 mm und einem effektiven Übersetzungsverhältnis von 1 : 3 einen maximalen Federungsweg von 75 mm an der Hinterradachse, senkrecht zum Boden bzw. zur Aufstellfläche des Fahrrads. Bei diesen Systemen werden durch die Übersetzung bedingt hohe Federsteifigkeiten gefordert, da die Feder nur z. B. ein Drittel des Weges des Hinterrades zurücklegt.

Ein Fahrradrahmen mit den Merkmalen des Oberbegriffs des Anspruchs 1 ist aus der FR 884 138 A bekannt.

Die Aufgabe der Erfindung ist es, einen Fahrradrahmen mit einem weiteren Federungssystem zur Verfügung zu stellen.

Diese Aufgabe wird erfindungsgemäß durch die Merkmale des Anspruchs 1 gelöst. Bevorzugte Weiterbildungen der Erfindung sind Gegenstand der Unteransprüche.

Gemäß Anspruch 1 weist ein Fahrradrahmen einen Rahmen bzw. Grundrahmen und eine Schwingeinrichtung zur Aufnahme eines Rades bzw. Hinterrades auf. Weiterhin ist eine Federeinrichtung vorgesehen, die zur elastischen Lagerung des Rades dient. Eine Übertragungseinrichtung ist um eine Drehachse schwenkbar mit dem Rahmen verbunden. In einem ersten Übertragungsabstand oder Verbindungsabstand von dieser Drehachse der Übertragungseinrichtung ist die Federeinrichtung mit der Übertragungseinrichtung schwenkbar verbunden. In einem zweiten Übertragungsabstand oder Verbindungsabstand von dieser Drehachse der Übertragungseinrichtung ist die Schwingeinrichtung mit der Übertragungseinrichtung schwenkbar verbunden. Dabei ist der zweite Übertragungs- oder Verbindungsabstand in Abhängigkeit von dem ersten Übertragungsoder Verbindungsabstand derart gewählt, daß ein Wegverhältnis aus Federungsweg der Schwingeinrichtung zu Federweg der Federeinrichtung kleiner als 2 ist. Der Federungsweg der Schwingeinrichtung ist dabei der Weg, den die Hinterradachse des Fahrrads (im wesentlichen) senkrecht zum Boden zurücklegt, und der Federweg der Federeinrichtung ist die daraus resultierende Änderung der Gesamtlänge der Federeinrichtung.

Der erfindungsgemäße Fahrradrahmen hat viele Vorteile.

Herkömmliche, im Stand der Technik bekannte Federungssysteme weisen Übersetzungsverhältnisse von Federungsweg des Rades zu Federung von bis zu 1 : 5 auf, so daß die Federeinrichtung nur zu einem Fünftel des Federungsweges des Rades ausgelenkt wird. Ein Nachteil dieser allgemein üblichen Wegverhältnisse ist die Auswirkung des kausalen Zusammenhangs zwischen Kraft und Weg. Derartig hohe Übersetzungsverhältnisse verkleinern nicht nur den Federweg des Federsystems, sondern erhöhen auch die auf das Federelement und den Rahmen wirkenden Kräfte, insbesondere bei einer Überschreitung des vorgesehenen Federungsweges der Schwingeinrichtung.

Durch die benötigte hohe Federsteifigkeit bzw. Federrate des Federelements bedingt wirken bei konventionellen gefederten Rahmen große Kräfte auf das Federelement und den Rahmen. Die durch das hohe Übersetzungsverhältnis bedingten großen Kräfte erfordern für die Betriebssicherheit des Fahrrades einen hohen konstruktiven Aufwand zur Erzielung einer befriedigenden Betriebsfestigkeit. Dies wird durch einen hohen Materialeinsatz realisiert, der dem Ziel des Leichtbaus bei Fahrrädern widerspricht, denn beim professionellen Einsatz von Fahrrädern wird ein hoher Wert auf ein niedriges Gesamtgewicht gelegt, zu dem der Fahrradrahmen nicht unbeträchtlich beiträgt. Dies gilt in zunehmendem Maße auch für den Freizeit- und Sportbereich.

Mit dem erfindungsgemäßen Fahrradrahmen kann es möglich sein, das Gewicht zu reduzieren, da die auftretenden Kräfte und somit die auftretenden Belastungen reduziert werden, wodurch eine leichtere Bauweise ermöglicht wird.

Ein weiterer Vorteil des erfindungsgemäßen Fahrradrahmens ist, daß die Dämpfung der Federeinrichtung zuverlässiger und einfacher realisiert werden kann. Zur Dämpfung von Federelementen sind im allgemeinen lange Arbeitswege und niedrige Federkräfte die Garanten für gute Funktion bei niedrigem Bauaufwand, während hohe Federkräfte und kurze Arbeitswege den Aufwand zur Dämpfung beträchtlich erhöhen können. Bei dem erfindungsgemäßen Fahrradrahmen werden lange Federwege mit geringen Federkräften verwendet, so daß der Aufwand zur Dämpfung reduziert wird. Dies gilt insbesondere bei dem Einsatz von in der Zugstufe gedämpften Federelementen.

Gemäß einer bevorzugten Weiterbildung des erfindungsgemäßen Fahrradrahmens ist das Wegverhältnis von Federungsweg der Schwingeinrichtung zu Federweg der Federeinrichtung im Bereich zwischen 0,25 und 2 und vorzugsweise zwischen 0,5 und 1,5. Vorzugsweise liegt das Verhältnis zwischen 0,7 und 1,4. Besonders bevorzugt ist das Wegverhältnis von Federungsweg der Schwingeinrichtung zu Federweg der Federeinrichtung zwischen 0,8 und 1,2 und besonders bevorzugt etwa 1.

Insbesondere die Einstellung des Wegverhältnisses auf den Bereich von 1 +/- 50% oder 1 +/- 20% ist sehr vorteilhaft, da die auftretenden Federkräfte reduziert werden. So werden bei einer Überschreitung des zulässigen Federungsweges des Hinterrads die auftretenden Kräfte am Rahmen und der Federeinrichtung gegenüber denen im Stand der Technik erheblich reduziert. Dabei ist insbesondere auch zu berücksichtigen, daß die Federkennlinien von üblicherweise verwendeten Feststoffsowie Gasfedern ab einem bestimmten Federweg progressiv verlaufen können, so daß bei einer Überschreitung des zulässigen Federwegs die auftretenden Kräfte überproportional steigen. Durch die geringeren Federsteifigkeiten bzw. Federkennlinien beim erfindungsgemäßen Fahrradrahmen werden derartig hohe Kräfte wirksam vermieden. Dadurch kann eine leichtere und stabilere Bauform realisiert werden.

Gemäß einer bevorzugten Weiterbildung der Erfindung ist das Wegverhältnis zwischen Federungsweg der Schwingeinrichtung und dem Federweg der Federeinrichtung einstellbar. Dies könnte z. B. dadurch realisiert werden, daß an der Übertragungseinrichtung eine Mehr- oder Vielzahl von Anordnungs- bzw. Befestigungsmöglichkeiten der Federeinrichtung und/oder der Schwingeinrichtung zur Verfügung stehen, so daß durch das Ummontieren eines oder beider Einrichtungen der erste und/oder der zweite Verbindungsabstand und damit das Übertragungs- bzw. Übersetzungsverhältnis der Übertragungseinrichtung, und somit das Wegverhältnis, einstellbar ist. Eine derartige Einstellung könnte auch kontinuierlich erfolgen, so daß nicht nur eine vorbestimmte Anzahl von Aufnahmen bzw. Bohrungen an der Übertragungsvorrichtung vorgesehen sein muß.

Die Einstellung des Wegverhältnisses ist sehr vorteilhaft, da dadurch insbesondere eine Feineinstellung der effektiven Federcharakteristik ermöglicht wird.

Gemäß einer weiteren bevorzugten Weiterbildung einer oder mehrerer der zuvor beschriebenen Weiterbildungen der Erfindung umfaßt die Übertragungseinrichtung wenigstens eine Wippeneinrichtung, wobei die Wippeneinrichtung dann vorzugsweise schwenkbar mit dem Rahmen verbunden ist.

Gemäß einer weiteren Weiterbildung der Erfindung umfaßt die Übertragungseinrichtung wenigstens eine Hebeleinrichtung. In einer weiteren bevorzugten Weiterbildung ist die Hebeleinrichtung um die Drehachse der Übertragungseinrichtung schwenkbar am Rahmen angeordnet. Erfindungsgemäß ist die Federeinrichtung mit der Schwingeinrichtung verbunden, wobei vorzugsweise ein erstes Ende der Federeinrichtung mit der Übertragungseinrichtung verbunden ist und wobei vorzugsweise ein zweites Ende der Federeinrichtung mit der Schwingeinrichtung verbunden ist. Besonders bevorzugt bilden bei dieser Ausgestaltung wenigstens ein Teil der Schwingeinrichtung, die Federeinrichtung und die Übertragungseinrichtung im wesentlichen ein Dreieck, wobei ein Teil der Schwingeinrichtung und die Federeinrichtung sogar im wesentlichen parallel verlaufen können, so daß sich ein spitzwinkliges Dreieck oder eine Art Parallelogramm ergibt.

Eine derartige Ausgestaltung ist sehr vorteilhaft, da die Federeinrichtung dann im Bereich des Hinterrades angeordnet sein kann und keinen Platz am Hauptrahmen beansprucht. Besonders bevorzugt ist es bei einer derartigen Ausgestaltung, wenn die Übertragungseinrichtung eine Wippeneinrichtung umfaßt, wobei dann bevorzugterweise die Schwingeinrichtung auf der einen Seite der Drehachse der Übertragungseinrichtung angeordnet ist und die Federeinrichtung auf der anderen Seite vorgesehen ist. Bei solchen Weiterbildungen kann dann die Summe aus erstem Verbindungs- bzw. Übertragungsabstand und zweitem Verbindungs- bzw. Übertragungsabstand ein Maß für eine Länge der Übertragungseinrichtung darstellen.

Gemäß einer weiteren erfindungsgemäßen Weiterbildung der Erfindung ist die Federeinrichtung vorzugsweise schwenkbar mit dem Rahmen verbunden, so daß die Federeinrichtung gegenüber dem Rahmen wenigstens um einen geringen Winkel verschwenkbar ist. Besonders bevorzugt ist die Federeinrichtung bei dieser Weiterbildung mit dem Unterrohr bzw. der Unterrohreinrichtung des Rahmens verbunden.

Bevorzugt ist die Federeinrichtung mit einem ersten Ende mit der Übertragungseinrichtung und mit einem zweiten Ende mit dem Unterrohr des Rahmens schwenkbar verbunden. Besonders bevorzugt ist die Federeinrichtung im wesentlichen parallel zu dem Unterrohr angeordnet, und eine Federbewegung der Federeinrichtung ist im wesentlichen parallel zu einer Längsachse des Unterrohrs angeordnet. Dabei kann auch ein kleiner Winkel vorliegen.

Gemäß allen zuvor beschriebenen Ausgestaltungen der Erfindung ist die Schwingeinrichtung gegenüber dem Rahmen schwenkbar angeordnet. Dabei kann die Schwingeinrichtung die sogenannten Kettenstreben, Sitzstreben und die Ausfallenden sowie weitere Einrichtungen umfassen. Es ist möglich, daß Ketten- und/oder Sitzstreben schwenkbar oder fest mit den Ausfallenden verbunden sind.

Bevorzugt ist, daß die Schwingeinrichtung um eine Achse schwenkbar angeordnet ist, die parallel zur Tretlagerachse von dieser beabstandet ist, so daß sich beim fertig montierten Fahrrad die Schwenkachse der Schwingeinrichtung in etwa auf der Höhe des Kettentrums ergibt. Dadurch wird auch bei Federungsbewegungen des Hinterrades eine im wesentlich gleichbleibende Kettenlänge zwischen Kettenblatt und Ritzel erzielt. Es ist aber auch möglich, daß die Schwingeinrichtung um das Tretlager schwenkbar angeordnet ist.

Die Federeinrichtung kann in einer oder mehreren der zuvor beschriebenen Weiterbildungen der Erfindung im wesentlichen auf einer Seite des Rahmens angeordnet sein. Besonders bevorzugt ist die Federeinrichtung im wesentlichen auf der - in Fahrtrichtung gesehenen - linken Seite des Rahmens angeordnet.

Damit wird den limitierten Platzverhältnissen bei Fahrrädern Rechnung getragen, bei denen der Antriebsstrang grundsätzlich rechtsseitig plaziert ist. Weiterhin kann dadurch eine bessere Gewichtsaustarierung rechts - links erzielt werden.

Ebenso kann die Anordnung der Federeinrichtung im wesentlichen innerhalb der Ebene des Fahrradrahmens erfolgen.

Gemäß einer bevorzugten Weiterbildung der Erfindung ist ein Ausrichtungswinkel der Federeinrichtung über im wesentlichen den gesamten Federweg der Federeinrichtung im wesentlichen konstant.

Wie schon angemerkt, können die Federkennlinien von Feststoffund Gasfedern linear oder sogar progressiv verlaufen. Eine zusätzliche Progression oder auch eine Degression durch sich ändernde Ausrichtungswinkel ist im Betrieb nicht wünschenswert. Durch eine zusätzliche Progression werden die auf den Rahmen und die Federeinrichtung auftretenden Kräfte vergrößert, so daß der konstruktive Aufwand wiederum steigt.

Eine Änderung des Ausrichtungswinkels der Federeinrichtung zwischen Ruhelage der Federeinrichtung und maximaler Einfederung in erheblichem Ausmaß bewirkt eine zusätzliche Progression bzw. Degression, so daß die effektive Federkennlinie sich aus der ursprünglichen Federkennlinie und den Änderungen des Ausrichtungswinkels der Federeinrichtung ergibt.

Bei den im Stand der Technik bekannten Federsystemen ergibt sich eine Änderung des Ausrichtungswinkels der Federeinrichtung über den Federweg. Dies bedeutet, daß sich bei einer linearen Federcharakteristik der Federeinrichtung eine effektive progressive Federcharakteristik ergibt.

Demgegenüber hat der erfindungsgemäße Fahrradrahmen erhebliche Vorteile. Durch einen nahezu konstanten Ausrichtungswinkel der Federeinrichtung über den Federweg kann eine einfache und passende Abstimmung des gefederten Rahmens hinsichtlich seines Federverhaltens und der zur Vermeidung störenden Nachwippens benötigten Dämpfung oder Zugstufendämpfung leicht erzielt werden. Bei im Stand der Technik bekannten Federsystemen hängt die aktuelle Dämpfung von der aktuellen Federposition ab.

Gemäß einer weiteren bevorzugten Weiterbildung der Erfindung umfaßt die Übertragungseinrichtung wenigstens eine Hebeleinrichtung und wenigstens eine Schubeinrichtung, die vorzugsweise schwenkbar mit der Hebeleinrichtung verbunden ist.

Dann ist es bevorzugt, daß die Schwingeinrichtung mit der Schubeinrichtung schwenkbar verbunden ist, so daß die Schwingeinrichtung über die Schubeinrichtung auf die Hebeleinrichtung einwirkt, die dann wiederum entsprechend dem gewählten Übertragungsverhältnis auf die Federeinrichtung einwirkt.

Bei Einsatz einer Hebeleinrichtung anstelle von einer Wippeneinrichtung in der Übertragungseinrichtung ist das Übertragungsverhältnis der Übertragungseinrichtung proportional zu dem Verhältnis von erstem Übertragungsabstand zu zweitem Übertragungsabstand, während einer Länge der Hebeleinrichtung proportional zu dem ersten Übertragungsabstand ist.

In allen Fällen bestimmt sich das Wegverhältnis aus dem Übertragungsverhältnis und den sonstigen Geometriebedingungen des Rahmens, so daß ein geringes Übertragungsverhältnis nicht notwendigerweise mit einem geringen Wegverhältnis gleichzusetzen ist.

Die geringen am Federbein angreifenden Kräfte machen ein zweites, auf der rechten Rahmenseite zusätzlich angebrachtes Federbein überflüssig, es kann aber vorgesehen sein.

Hohe Federkräfte im Stand der Technik und kurzer Regelweg bedingen große, nur mit hohem technischem Konstruktions- und Bauaufwand in der Zugstufen-Dämpfung wirksam zu regelnde Federkräfte.

Die Erfindung ermöglicht den Einsatz niederer Federraten am Federelement sowie eine durch die lineare Übertragung der Federbewegung vom Federelement auf das Hinterrad einfache und gleichzeitig wirksame Feder- und Dämpfungs-Abstimmung auf das jeweilige Fahrergewicht.

Auf das Federelement und den Rahmen wirkende Kräfte werden reduziert, die Betriebsfestigkeit damit nachhaltig verbessert.

Als direkte Folge ergibt sich im Vergleich zu bekannten Systemen eine risikoarme Möglichkeit der Gewichtsersparnis an Rahmen und Federelement ohne gleichzeitige Beeinträchtigung der Betriebsfestigkeit.

Weitere Vorteile und Ausgestaltungsmöglichkeiten des erfindungsgemäßen Fahrradrahmens werden im folgenden Ausführungsbeispiel mit Bezug auf die Figuren beschrieben.

In den Figuren zeigt:
- Fig. 1: den Hinterbau eines Ausführungsbeispiels gemäß der vorliegenden Erfindung in der Ruhelage;
- Fig. 2: den Hinterbau gemäß Fig. 1 im eingefederten Zustand;
- Fig. 3: eine Seitenansicht des Fahrradrahmens gemäß dem Ausführungsbeispiel nach Fig. 1;
- Fig. 4: eine Ansicht auf die Sitzstreben des Fahrradrahmens gemäß Fig. 1 von hinten;
- Fig. 5: zur Verdeutlichung eine Seitenansicht eines anderen Fahrradrahmens in der Ruhelage; und
- Fig. 6: eine Seitenansicht des Fahrradrahmens gemäß Fig. 5 in eingefedertem Zustand.

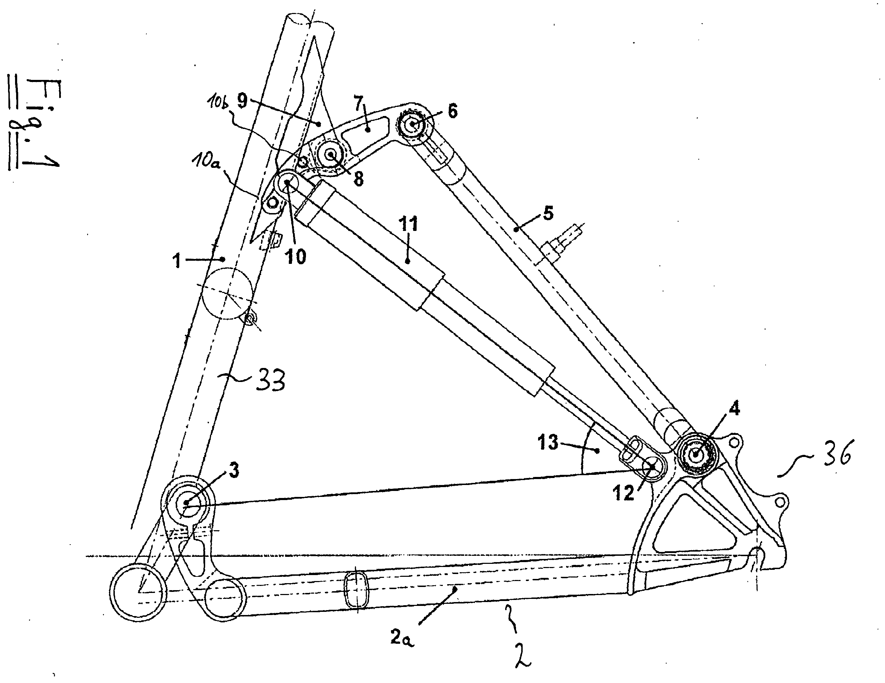

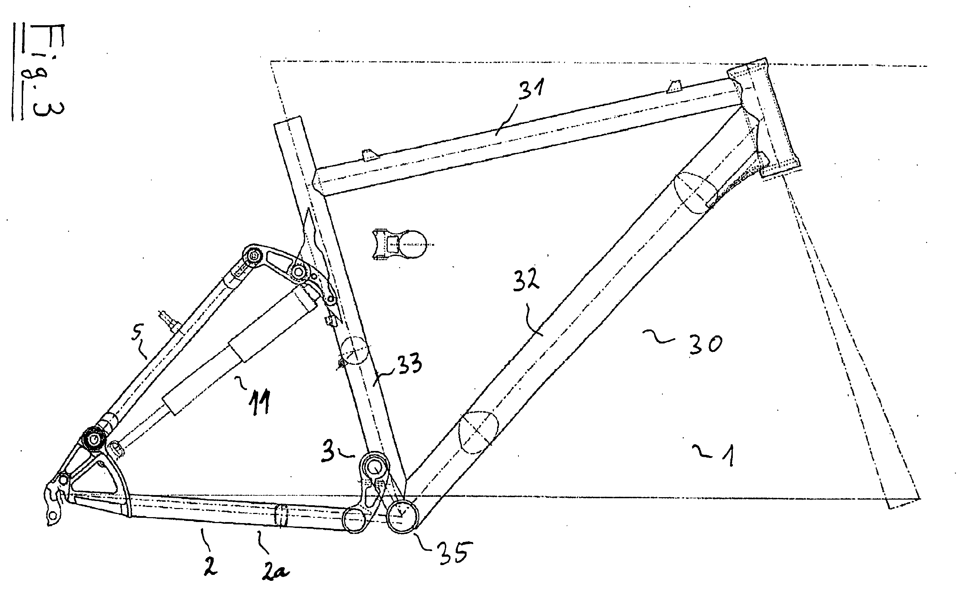

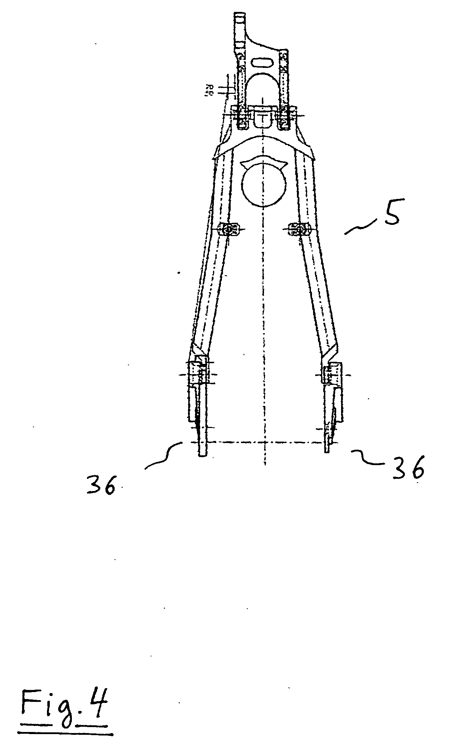

Mit Bezug auf die Figuren 1 bis 4 wird nun ein Ausführungsbeispiel des erfindungsgemäßen Fahrradrahmens beschrieben.

Der erfindungsgemäße Rahmen 1 weist einen Hauptrahmen 30 auf, der eine im wesentlichen konventionelle Geometrie aufweist. Der Hauptrahmen 30 umfaßt ein Oberrohr 31, ein Unterrohr 32 und ein Sitzrohr 33, in das von oben eine Sattelstütze (nicht dargestellt) einzustecken ist. An dem unteren Ende des Unterrohrs 32 ist eine Aufnahme 35 für ein Tretlager vorgesehen.

In diesem Ausführungsbeispiel ist die Hinterradschwinge oberhalb des Tretlagers 35 um einen Drehpunkt 3 verschwenkbar gelagert. Dabei ist der Drehpunkt 3 der Hinterradschwinge derart angeordnet, daß bei einem montierten Fahrrad dieses die Höhe des Kettentrums erhält. Bei einem Fahrrad mit mehreren Antriebsritzeln entspricht dies dann der Höhe eines der Ritzel und vorzugsweise dem mittleren Ritzel, so daß durch eine Federungsbewegung des Hinterrades die effektive Kettenlänge von Kettenblatt zu hinterem Ritzel im wesentlichen konstant ist, so daß dadurch keine störenden Vibrationen beim Antrieb auftreten.

Die Hinterradschwinge 2 umfaßt Kettenstreben 2a, Ausfallenden 36 zur Aufnahme der Achse des Hinterrades, und Sitzstreben 5, die über ein Ausgleichsgelenk 4 mit dem Ausfallende 36 drehbar verbunden sind.

Während das untere Ende der Sitzstreben 5 am Ausgleichsgelenk 4 mit dem Ausfallende 4 verbunden ist, ist das obere Ende der Sitzstreben 5 über ein Gelenk 6 mit einer in diesem Ausführungsbeispiel als Wippe ausgeführten Übertragungseinrichtung 7 verbunden. Die Wippe 7 ist an einem Wippendrehpunkt 8 drehbar an einer Wippenaufnahme 9 angeordnet, die fest mit dem Hauptrahmen 30 an dem Sitzrohr 33 angebracht ist.

Das vom Hauptrahmen abgewandte Ende der Wippe 7 ist über das Gelenk 6 mit den Sitzstreben verbunden, und das dem Hauptrahmen zugewandte Ende weist ein Drehgelenk 10 auf, an dem das obere Ende des Federbeins 11 angelenkt ist. Das untere Ende des Federbeins 11 ist an einer unteren Federbeinaufnahme 12 am Ausfallende drehbar gelagert.

Bei dieser Ausführungsform ergibt sich näherungsweise ein spitzwinkliges Dreieck zwischen der Sitzstrebe 5, der Wippe 7 und dem Federbein 11, wobei die langen Seiten des Dreiecks durch das Federbein und die Sitzstrebe gebildet werden.

Ein besonderer Vorteil dieser Federbeinanordnung ist auch, daß der Hauptrahmen 30 zwischen den Rohren 31, 32, 33 frei bleibt, während im Stand der Technik das Federelement oft an dem Sitzrohr innerhalb des durch die Rohre 31, 32 und 33 gebildeten Fläche angeordnet ist. Bei der vorliegenden Anordnung können in dem freien Raum innerhalb des Hauptrahmens 30 Trinkflaschen, Luftpumpen, Schlösser oder sonstige Gegenstände angeordnet werden.

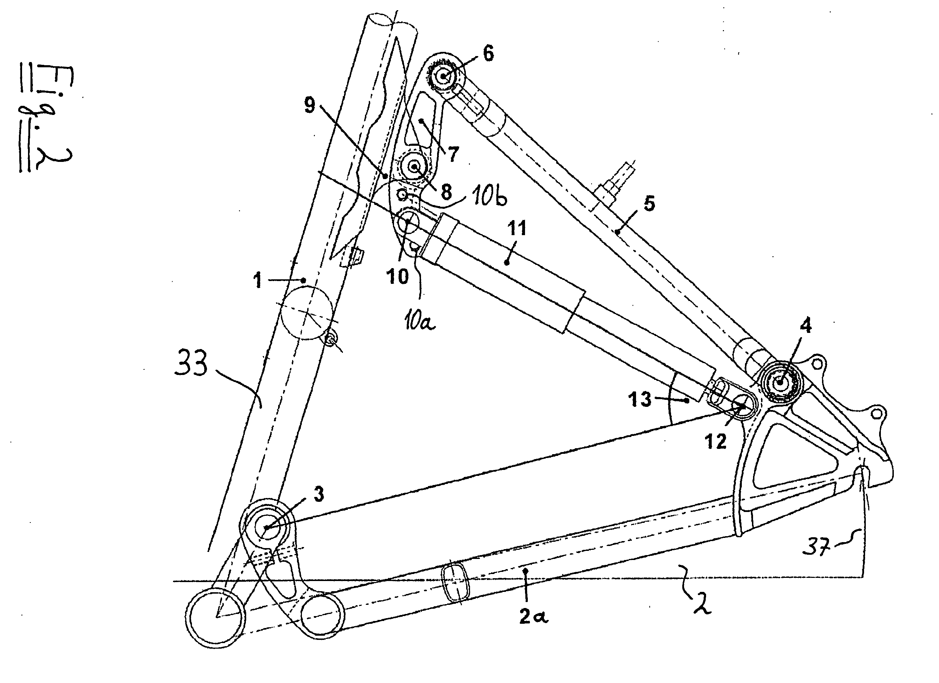

Ein Ausrichtungswinkel 13 zwischen einer Achse durch das Gelenk der unteren Federbeinaufnahme 12 und dem Drehpunkt 3 der Hinterradschwinge und einer Achse durch das Federbein 11 ist bei der in den Fig. 1 bis 4 dargestellten Ausführungsform im wesentlichen unabhängig von dem Federzustand des Hinterrads, so daß der Ausrichtungswinkel 13 in der Ruhelage (vgl. Fig. 1) und im eingefederten Zustand, wie in Fig. 2 dargestellt, im wesentlichen gleich ist, wobei in diesem Ausführungsbeispiel die Abweichung über dem Federweg nur etwa 1° beträgt.

Die obere Federbeinaufnahme ist mit dem Gelenk 10 an der Wippe 7 angelenkt. Das obere Federbeinende kann allerdings auch an den Bohrungen 10a oder 10b drehbar befestigt werden. Je nach Befestigung (10a, 10, 10b) ergeben sich unterschiedliche erste und zweite Verbindungsabstände und dadurch unterschiedliche Übertragungsverhältnisse an der Wippe 7 und somit unterschiedliche Wegverhältnisse von Federungsweg des Ausfallendes zu Federweg des Federbeins, wobei in allen Fällen das Verhältnis ca. 1 beträgt. Durch die Einstellungsmöglichkeiten ist hier eine Änderung des Verhältnisses im Bereich von etwa bis zu 20 bis 30% möglich. In anderen Ausführungsformen kann der Einstellbereich auch größer und/oder feiner abgestuft sein.

Im Unterschied zu im Stand der Technik bekannten Federungssystemen ist in diesem Ausführungsbeispiel der Federungswinkel bzw. der Ausrichtungswinkel des Federbeins zwischen Ruhelage und maximaler Einfederung im wesentlichen gleich. Im Stand der Technik hingegen ändert sich der Federungswinkel mit der Einfederbewegung des Federelements, so daß sich mit dem Federweg das Übersetzungsverhältnis zwischen Federungsweg des Hinterrads und Federweg des Federbeins ändert. Der sich stetig ändernde Winkel bewirkt eine Pro- oder auch Degression der Federkennlinie. Daraus resultiert, daß eine passende Abstimmung des gefederten Rahmens hinsichtlich seines Federverhaltens und der zur Vermeidung störenden Nachwippens benötigten Zugstufen-Dämpfung sich unter diesen Bedingungen im Stand der Technik nur schwer erzielen läßt.

Im Unterschied dazu ist es bei dem im Ausführungsbeispiel dargestellten Fahrradrahmen möglich, die Zugstufen-Dämpfung zuverlässig einzustellen.

Bei dem im Ausführungsbeispiel dargestellten Mountainbike-Fahrradrahmen beträgt der Arbeitshub am Federbein 11 etwa 65 mm, und der an der Hinterradachse zur Verfügung stehende Federungsweg 37 beträgt ebenfalls etwa 65 mm, so daß der lineare Federweg des Federelements im unveränderten Maße auf die Raderhebungskurve des Hinterrades übertragen wird.

Im Gegensatz zu marktüblichen Konstruktionen werden deshalb im Ausführungsbeispiel Federelemente eingesetzt, die nicht nur einen Arbeitshub zwischen 15 und 45 mm aufweisen, sondern wenigstens 60 bzw. 65 mm.

Als Folge des Wegverhältnisses von ca. 1 : 1 werden die am Rahmen und am Federbein auftretenden maximalen Kräfte insbesondere, aber nicht nur, bei Überschreitung der vorgesehenen Wege reduziert.

Durch die längeren Federwege bedingt können Federn mit geringeren Federraten bzw. Federsteifigkeiten eingesetzt werden, was bei Gasfedern niedrige Gasdrücke erlaubt. Durch die geringeren Gasdrücke werden auch Vorteile hinsichtlich des Befüllens und der Dichtigkeitserfordernisse der Federelemente erzielt.

Die Zugstufen-Dämpfung, also die Dämpfung der Ausfederbewegung des Hinterrades, arbeitet in dem dargestellten Ausführungsbeispiel gemäß Fig. 1 bis 4 im Vergleich zu den hoch übersetzten Systemen wesentlich effektiver, da für die Dämpfung der kleineren Federkräfte größere Regelwege zur Verfügung stehen.

Durch die kleineren maximal auftretenden Kräfte wird eine höhere Betriebsfestigkeit mit einem leichtbauenden Rahmen erzielt.

Im Ausführungsbeispiel ist eine einseitige, außermittige Lage des Federbeins auf der in Fahrtrichtung gesehen linken Seite des Rahmens im Hinterbau vorgesehen. Es könnte allerdings auch ein zweites Federbein vorgesehen sein.

Die Sitzstreben 5 sind mit den Kettenstreben 2a gelenkig über einen Drehpunkt 4 verbunden.

Für die Funktion der Erfindung ist es im wesentlichen unerheblich, ob das Ausgleichsgelenk 4 der Hinterradschwinge vor der Hinterradachse angeordnet wird (ein sogenanntes Horst-Link), oder ob das Ausgleichsgelenk 4 oberhalb der Hinterradachse positioniert ist, wie es in den Fig. 1 bis 4 dargestellt ist.

Die Sitzstreben 5 sind mit der Wippe 7 verbunden und dienen somit als Schubstange zwischen dem Ausfallende 36 und der Wippe 7, und der Federungsweg des Rades wird auf die Wippe 7 übertragen.

Die Längenverhältnisse an der Wippe 7 zwischen der oberen Federbeinaufnahme 10 und dem Wippendrehpunkt 8 einerseits und der gelenkigen Sitzstrebenanlenkung 6 und dem Wippendrehpunkt 8 andererseits bestimmen das auf das Federbein 11 wirkende Übersetzungsverhältnis, welches hier erfindungsgemäß auf etwa 1 : 1 eingestellt wird.

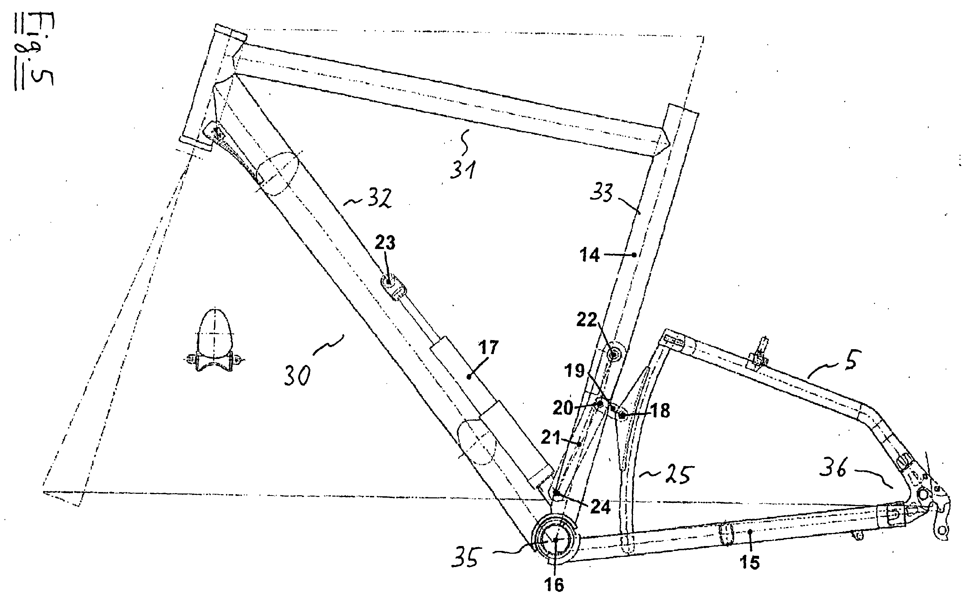

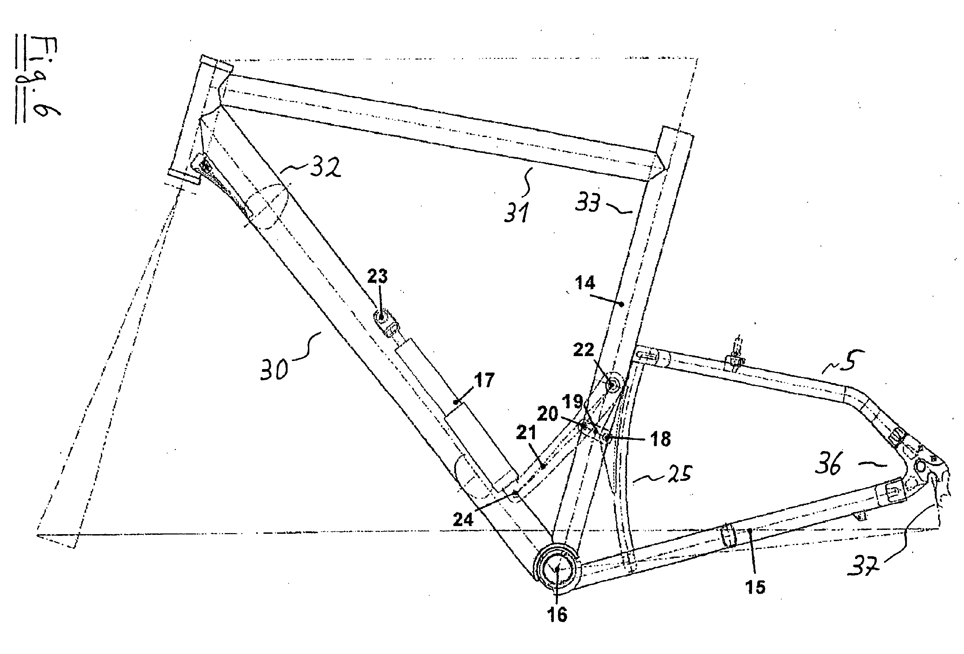

In den Fig. 5 und 6 ist ein weiterer Fahrradrahmen dargestellt, welcher nun mit Bezug auf die Zeichnungen beschrieben wird, wobei gleiche bzw. ähnliche Komponenten die gleichen Bezugszeichen aufweisen können. Dieser Fahrradrahmen ist nicht Gegenstand der Erfindung sondern dient nur der Verdeutlichung.

Der Rahmen 14 umfaßt einen Hauptrahmen 30, der wiederum ein Oberrohr 31, ein Unterrohr 32 und ein Sitzrohr 33 umfaßt. Dieser Fahrradrahmen eignet sich insbesondere für ein Fahrrad der Kategorie Trekking- bzw. Citybike.

An dem Hauptrahmen 30 ist eine Hinterradschwinge 15 angeordnet, die drehbar um einen Drehpunkt 16 gelagert ist. Hier ist der Drehpunkt 16 der Hinterradschwinge 15 gleich der Achse des Tretlagers 35, wobei auch der Drehpunkt der Hinterradschwinge in Höhe des Kettentrums angeordnet werden kann. Die Hinterradschwinge 15 weist Streben in Art von Sitzstreben 5 und Querstreben 25 auf.

Die Übertragungseinrichtung umfaßt in diesem Ausführungsbeispiel einen Hebel 21 und ein gelenkig damit verbundenes Schub- oder Koppelglied 19.

Es ist möglich, nur auf einer Rahmenseite ein Koppelglied 19 und/oder eine Querstrebe 25 vorzusehen. Es ist ebenso möglich, ein Koppelglied 19 und/oder eine Querstange 25 auf beide Rahmenseiten anzuordnen.

Das Koppelglied 19 ist gelenkig mit der Querstrebe 25 verbunden, so daß eine Drehbewegung der Hinterradschwinge um den Drehpunkt 16 über das Koppelglied 19 auf den Hebel 21 einwirkt. Der Drehpunkt des Koppelgliedes an den Querstreben ist mit 18 bezeichnet und der Drehpunkt von Koppelglied und Hebel 21 ist mit 20 bezeichnet.

Beim Einfedern aus der Ruhelage wirkt die Querstrebe 25 über das Koppelglied 19 auf den Hebel 21, der um den Hebeldrehpunkt 22, der an dem Sitzrohr angeordnet ist, nach vorn gedreht wird. Das im Ausführungsbeispiel entlang und oberhalb des Unterrohrs angeordnete Federbein wird durch die Auslenkung des Hebels 21 um den Hebeldrehpunkt 22 komprimiert, da das andere Ende des Hebels 24 mit dem unteren Ende des Federbeins 17 verbunden ist. Das obere Ende des Federbeins 17 ist gelenkig am Drehpunkt 23 mit dem Unterrohr verbunden.

Die beiden gegenläufigen Bewegungen der Kreisbahnen des am Sitzrohr des Rahmens am Hebeldrehpunkt 22 befestigten Hebels 21 und der um den Drehpunkt 16 drehenden Hinterradschwinge 15 werden durch die als Koppelglied 19 fungierende Schubstange ausgeglichen. Auch in diesem Ausführungsbeispiel beträgt der Arbeitshub des eingesetzten Federbeins etwa 65 mm, wie auch der Federungsweg des Hinterrades etwa 65 mm beträgt.

Das Übertragungsverhältnis der aus Koppelglied 19 und Hebel 21 bestehenden Übertragungseinrichtung kann durch eine Veränderung der Abstände von Koppelglied-Drehpunkt 20 zu Hebeldrehpunkt 22 am Sitzrohr zu dem Abstand von Hebeldrehpunkt 22 und gelenkiger unterer Federbeinaufnahme 24 des Hebels 21 eingestellt werden. Werden beispielsweise mehrere mögliche Drehpunkte 20 für die Anbindung des Koppelgliedes 19 vorgesehen, so können erste und zweite Verbindungsabstände variiert werden und das Übertragungsverhältnis kann eingestellt werden.

Bei maximalem Federungsweg 37 des Hinterrades wird die Gesamtlänge des Federbeins von dem Drehpunkt 23, an den das Federbein 17 mit dem Unterrohr 32 verbunden ist, zu der gelenkigen Federbeinaufnahme 24 unten am Federbein 17 entsprechend im Wegverhältnis 1 : 1 verkürzt.

## Patentansprüche

1. Fahrradrahmen mit einem Rahmen (1), welcher einen Hauptrahmen (30) und eine damit verbundene Schwingeinrichtung (2) aufweist, die ein Ausfallende (36) zur Aufnahme eines Rades aufweist; sowie mit einer Federeinrichtung (11),
- wobei die Federeinrichtung (11) mit der Schwingeinrichtung (2) verbunden ist,
- wobei eine Übertragungseinrichtung (7) vorgesehen ist, welche um eine Drehachse (8) schwenkbar mit dem Rahmen (1) verbunden ist,
- wobei in einem ersten Verbindurigsabstand von dieser Drehachse (8) diese Federeinrichtung (11) mit dieser Übertragungseinrichtung (7) schwenkbar verbunden ist,
- wobei in einem zweiten Verbindungsabstand von dieser Drehachse (8) diese Schwingeinrichtung (2) mit dieser Übertragungseinrichtung (7) schwenkbar verbunden ist und
- wobei der zweite Verbindungsabstand in Abhängigkeit von dem ersten Verbindungsabstand derart gewählt ist, dass ein Wegverhältnis von Federungsweg (37) der Schwingeinrichtung (2) und Federweg der Federeinrichtung kleiner als 2 ist, wobei der Federungsweg der Schwingeinrichtung der Weg ist, den die Hinterradachse senkrecht zum Boden zurücklegt und der Federungsweg der Federeinrichtung die daraus resultierende Änderung der Gesamtlänge der Federeinrichtung ist,
**dadurch gekennzeichnet, dass**
die Federreinrichtung (11) am Ausfallende (36) der Schwingeinrichtung (2) schwenkbar bzw. drehbar gelagert ist.

2. Fahrradrahmen nach Anspruch 1, **dadurch gekennzeichnet,**
**dass** das Wegverhältnis einer Gruppe von Wegverhältnissen entnommen ist, welche in den Wegverhältnisbereichen 0,25 bis 2 und 0,5 bis 1,5 und 0,7 bis 1,4 und 0,8 bis 1,2 enthalten ist.

3. Fahrradrahmen nach mindestens einem der vorhergehenden Ansprüche, **dadurch gekennzeichnet, dass** das Wegverhältnis einstellbar ist.

4. Fahrradrahmen nach mindestens einem der vorhergehenden Ansprüche, **dadurch gekennzeichnet, dass** diese Übertragungseinrichtung (7, 21) eine Wippeneinrichtung (7) umfasst.

5. Fahrradrahmen nach mindestens einem der vorhergehenden Ansprüche, **dadurch gekennzeichnet, dass** diese Übertragungseinrichtung (7, 21) eine Hebeleinrichtung (21) umfasst.

6. Fahrradrahmen nach mindestens einem der vorhergehenden Ansprüche, **dadurch gekennzeichnet, dass** diese Schwingeinrichtung (2) um eine Achse (35) einer Tretlageraufnahme (16) schwenkbar angeordnet ist.

7. Fahrradrahmen nach mindestens einem der vorhergehenden Ansprüche, **dadurch gekennzeichnet, dass** diese Schwingeinrichtung (2) um eine Achse (35) schwenkbar angeordnet ist, welche parallel zu und beabstandet von einer Achse einer Tretlageraufnahme (16) ist.

8. Fahrradrahmen nach mindestens einem der vorhergehenden Ansprüche, **dadurch gekennzeichnet, dass** diese Federeinrichtung (11, 17) im wesentlichen auf einer Seite des Rahmens (1, 14) und vorzugsweise auf der, in Fahrtrichtung gesehen, linken Seite des Rahmens angeordnet ist.

9. Fahrradrahmen nach mindestens einem der vorhergehenden Ansprüche, **dadurch gekennzeichnet, dass** ein Ausrichtungswinkel (13) dieser Federeinrichtung (11, 17) über den Federweg im wesentlichen konstant ist.

10. Fahrradrahmen nach mindestens einem der vorhergehenden Ansprüche, **dadurch gekennzeichnet, dass** die Federeinrichtung (11) im Wesentlichen innerhalb eines Dreiecks angeordnet ist, das von einer Sitzstrebe (5), einer Kettenstrebe (2a) und einem Sitzrohr (33) umschrieben ist.

11. Fahrradrahmen nach mindestens einem der vorhergehenden Ansprüche, **dadurch gekennzeichnet, dass** die Sitzstrebe (5), die Federeinrichtung (11) und die Wippeneinrichtung (7) ein spitzwinkliges Dreieck bilden, wobei die langen Seiten des Dreiecks durch die Sitzstrebe (5) und die Federeinrichtung (11) gebildet sind.

12. Fahrradrahmen nach mindestens einem der vorhergehenden Ansprüche, **dadurch gekennzeichnet, dass** die Verbindung der Federeinrichtung (11) mit dem Ausfallende (36) über ein Gelenk erfolgt.

## Claims

1. Bicycle frame with a frame (1), comprising a front triangle (30) and a swing arm attachment (2) coupled thereto, while the swing arm attachment has a drop out (36) to accept a wheel; and with a spring attachment (11),
whereas the spring attachment (11) is connected to the swing arm attachment (2), whereas a transmittal attachment (7) is arranged to be rotatably coupled to the frame (1) about a pivot axle (8),
whereas said spring attachment (11) is rotatably coupled to said transmittal attachment (7) at a first joining distance from this pivot axle (8),
whereas said swing arm attachment (2) is rotatably coupled to said transmittal attachment (7) at a second joining distance from this pivot axle (8),
and whereas the second joining distance is chosen depending on the first joining distance such that a travel ratio of suspension travel (37) of the swing arm attachment (2) and spring travel of the spring attachment is less than 2, whereas the suspension travel of the swing arm attachment is equal to the stretch perpendicular to the floor covered by the rear axle and the suspension travel of the spring attachment is equal to the resulting change of overall length of the spring attachment,
**characterised in that**
the spring attachment (11) is rotatably or rather pivotally supported by the drop out (36) of the swing arm attachment (2).

2. Bicycle frame according to claim 1, **characterised in that** the travel ratio is chosen from a set of travel ratios, which are included in the travel ratio ranges 0,25 to 2 and 0,5 to 1,5 and 0,7 to 1,4 and 0,8 to 1,2.

3. Bicycle frame according to at least one of the preceding claims, **characterised in that** the travel ratio can be adjusted.

4. Bicycle frame according to at least one of the preceding claims, **characterised in that** this transmittal attachment (7, 21) includes a rocker attachment (7).

5. Bicycle frame according to at least one of the preceding claims, **characterised in that** this transmittal attachment (7, 21) includes a lever attachment (21).

6. Bicycle frame according to at least one of the preceding claims, **characterised in that** this swing arm attachment (2) is arranged rotatably about an axle (35) on a bottom bracket receptacle (16).

7. Bicycle frame according to at least one of the preceding claims, **characterised in that** this swing arm attachment (2) is arranged rotatably about an axle (35), which runs parallel to an axle of a bottom bracket receptacle (16) at a certain distance.

8. Bicycle frame according to at least one of the preceding claims, **characterised in that** the spring attachment (11, 17) is arranged basically on one side of the frame (1, 14) and preferably on the left side of the frame as seen in the direction of travel.

9. Bicycle frame according to at least one of the preceding claims, **characterised in that** an angle of alignment (13) of this spring attachment (11, 17) is basically constant along the spring travel.

10. Bicycle frame according to at least one of the preceding claims, **characterised in that** the spring attachment (11) is basically arranged inside a triangle, which is circumscribed by a seat stay (5), a chain stay (2a) and a seat tube (33).

11. Bicycle frame according to at least one of the preceding claims, **characterised in that** the seat stay (5), the spring attachment (11) and the rocker attachment (7) form an acute-angled triangle, whereas the long sides of the triangle are formed by the seat stay (5) and the spring attachment (11).

12. Bicycle frame according to at least one of the preceding claims, **characterised in that** the spring attachment (11) and the drop out (36) are connected by a pivot.

## Revendications

1. Cadre de bicyclette avec un cadre (1) qui comporte un cadre principal (30) et un dispositif oscillant (2) relié à celui-ci qui comporte une patte arrière (36) pour le logement d'une roue, et avec un dispositif à ressort (11),
- dans lequel le dispositif à ressort (11) est relié au dispositif oscillant (2),
- dans lequel il est prévu un dispositif de transmission (7) qui est relié au cadre (1) de manière pivotante autour d'un axe de rotation (8),
- dans lequel ce dispositif à ressort (11) est relié à ce dispositif de transmission (7) de manière pivotante à une première distance de liaison par rapport à cet axe de rotation (8),
- dans lequel ce dispositif oscillant (2) est relié à ce dispositif de transmission (7) de manière pivotante à une seconde distance de liaison par rapport à cet axe de rotation (8),
- dans lequel la seconde distance de liaison est choisie en fonction de la première distance de liaison de manière à ce qu'un rapport de déplacement entre le déplacement élastique (37) du dispositif oscillant (2) et le débattement du dispositif à ressort soit inférieur à 2, le déplacement élastique du dispositif oscillant étant la distance parcourue par l'axe de roue arrière perpendiculairement au sol et le débattement du dispositif à ressort étant la variation de la longueur totale du dispositif à ressort qui en résulte,
**caractérisé en ce que**
le dispositif à ressort (11) est logé de manière pivotante ou rotative dans la patte arrière (36) du dispositif oscillant (2).

2. Cadre de bicyclette selon la revendication 1, **caractérisé en ce que** le rapport de déplacement est choisi dans un groupe de rapports de déplacement qui est compris dans les plages de rapports de déplacement de 0,25 à 2 et de 0,5 à 1,5 et de 0,7 à 1,4 et de 0,8 à 1,2.

3. Cadre de bicyclette selon au moins l'une quelconque des revendications précédentes, **caractérisé en ce que** le rapport de déplacement est réglable.

4. Cadre de bicyclette selon au moins l'une quelconque des revendications précédentes, **caractérisé en ce que** ce dispositif de transmission (7, 21) comporte un dispositif à bascule (7).

5. Cadre de bicyclette selon au moins l'une quelconque des revendications précédentes, **caractérisé en ce que** ce dispositif de transmission (7, 21) comporte un dispositif à levier (21).

6. Cadre de bicyclette selon au moins l'une quelconque des revendications précédentes, **caractérisé en ce que** ce dispositif de oscillant (2) est disposé de manière pivotante autour d'un axe (35) d'un logement de palier de pédalier (16).

7. Cadre de bicyclette selon au moins l'une quelconque des revendications précédentes, **caractérisé en ce que** ce dispositif de oscillant (2) est disposé de manière pivotante autour d'un axe (35) qui est parallèle à et écarté d'un axe d'un logement de palier de pédalier (16).

8. Cadre de bicyclette selon au moins l'une quelconque des revendications précédentes, **caractérisé en ce que** ce dispositif à ressort (11, 17) est disposé sensiblement sur un côté du cadre (1, 14) et, de préférence, sur le côté gauche du cadre vu dans le sens de marche.

9. Cadre de bicyclette selon au moins l'une quelconque des revendications précédentes, **caractérisé en ce qu'**un angle d'alignement (13) de ce dispositif à ressort (11, 17) est sensiblement constant sur la distance de débattement.

10. Cadre de bicyclette selon au moins l'une quelconque des revendications précédentes, **caractérisé en ce que** le dispositif à ressort (11) est disposé sensiblement à l'intérieur d'un triangle qui est circonscrit par une entretoise de selle (5), une entretoise de chaîne (2a) et un tube de selle (33).

11. Cadre de bicyclette selon au moins l'une quelconque des revendications précédentes, **caractérisé en ce que** l'entretoise de selle (5), le dispositif à ressort (11) et le dispositif à bascule (7) forment un triangle acutangle, les côtés longs du triangle étant formés par l'entretoise de selle (5) et le dispositif à ressort (11).

12. Cadre de bicyclette selon au moins l'une quelconque des revendications précédentes, **caractérisé en ce que** la liaison entre le dispositif à ressort (11) et la patte arrière (36) est réalisée au moyen d'un assemblage articulé.
